# EUROPEAN PATENT APPLICATION

(11) **EP 4 597 717 A1**
(43) Date of publication of application: **06.08.2025**
(21) Application number: 24223049.8
(22) Date of filing: 23.12.2024
(51) Int. Cl.: H01M 50/367, H01M 10/658, H01M 50/213, H01M 50/289

(54) **BATTERY PACK**

(30) Priority: 05.02.2024 CN 202420281382 U; 05.02.2024 CN 202410166791; 29.08.2024 WO PCT/CN2024/115356
(71) Applicant: Eve Energy Co., Ltd., Huizhou, Guangdong 516006 (CN)
(72) Inventor: ZHANG, Yixing, Huizhou, 516006 (CN); ZHOU, Jieyu, Huizhou, 516006 (CN); ZENG, Qin, Huizhou, 516006 (CN); WU, Liesong, Huizhou, 516006 (CN); LUO, Han, Huizhou, 516006 (CN)
(74) Representative: HGF

(57) **Abstract**

Provided is a battery pack. The battery pack includes at least two battery modules (100). Each battery module (100) includes a housing (1) and multiple battery cells (2) disposed in the housing (1). Multiple pressure relief holes (122) are disposed on a side surface of the housing (1). The multiple pressure relief holes (122) are in a one-to-one correspondence with the multiple cells (2). One end of each battery cell (2) has an explosion-proof hole. The explosion-proof hole communicates with a corresponding pressure relief hole (122). Two adjacent battery modules (100) form a module assembly. In the same module assembly, two housings (1) are spaced apart to form a pressure relief channel (300), and pressure relief holes (122) on the two housings (1) are facing the pressure relief channel (300).

## Description

### TECHNICAL FIELD

The present application relates to the field of power battery technology, in particular, a battery pack.

### BACKGROUND

Currently, the new energy vehicle industry is developing rapidly. The energy density of the battery pack, an energy storage device for new energy vehicles, plays a crucial role in determining the driving range of new energy vehicles.

In related art, battery packs are typically designed as a double-layer or multi-layer module structure, that is, the battery pack includes two or more battery modules arranged in a stacked configuration. This structure helps improve the space utilization of new energy vehicles, thereby increasing the energy storage capacity of the battery pack within the limited chassis space. However, due to the stacked arrangement of the battery modules, when thermal runaway occurs in a battery cell within a module, thermal runaway may easily spread to adjacent cells, leading to an accident where high-temperature gases and electrolyte substances are expelled. This can cause damage to nearby battery cells and components, thus affecting the safe operation of the battery pack.

### SUMMARY

Embodiments of the present application provide a battery pack. The battery pack includes at least two battery modules. Each battery module includes a housing and multiple battery cells disposed in the housing. Multiple pressure relief holes are disposed on a side surface of the housing. The multiple pressure relief holes are in a one-to-one correspondence with the multiple cells. One end of each battery cell has an explosion-proof hole. The explosion-proof hole communicates with a corresponding pressure relief hole. Two adjacent battery modules form a module assembly. In the same module assembly, two housings are spaced apart to form a pressure relief channel, and pressure relief holes on the two housings are facing the pressure relief channel.

The present application, by arranging multiple battery modules in a battery pack, facilitates the placement of more battery cells within the limited space for installing the battery pack, thereby improving the overall energy density of the battery pack. Additionally, two adjacent battery modules are spaced apart to form a pressure relief channel so that the two adjacent battery modules share the same pressure relief channel, which helps improve the space utilization of the battery pack. The two battery modules share a pressure relief channel so that when battery cells in the two adj acent battery modules have thermal runaway, high-temperature gases are discharged into the same pressure relief channel, that is, the high-temperature area is also concentrated in the pressure relief channel during pressure relief. This structure makes it easier to implement corresponding thermal insulation designs in the area of the pressure relief channel, providing thermal protection for the battery cells inside the battery modules, which helps simplify the overall structure of the battery pack. Since the pressure relief holes on the two battery modules are facing the pressure relief channel, the high-temperature gases discharged during pressure relief enter the pressure relief channel, with the thermal effect on a battery cell mainly concentrated at the end of the battery cell that has the explosion-proof hole, thereby preventing high-temperature gases from affecting the end of the battery cell that has the positive and negative electrodes (that is, the end of the battery cell away from the explosion-proof hole). As a result, the entire battery pack has good safety performance.

### BRIEF DESCRIPTION OF THE DRAWINGS

FIG. 1 is a schematic diagram of a battery pack according to an embodiment of the present application. (One battery module is removed)
FIG. 2 is a sectional view of a battery pack according to an embodiment of the present application.
FIG. 3 is an enlarged view of point A in FIG. 2.
FIG. 4 is a partial sectional view of a second clamping plate according to an embodiment of the present application.
FIG. 5 is an exploded view of a battery pack according to an embodiment of the present application.
FIG. 6 is an enlarged view of point B in FIG. 5.
FIG. 7 is a schematic diagram of a bus terminal according to an embodiment of the present application.
FIG. 8 is a schematic diagram of a first fixing member according to an embodiment of the present application.
FIG. 9 is a schematic diagram of a second fixing member according to an embodiment of the present application.
FIG. 10 is a schematic diagram of an insulating sleeve according to an embodiment of the present application.
FIG. 11 is a schematic diagram of an insulating protection box according to an embodiment of the present application.

### Reference list

1 housing
11 first clamping plate
111 outer plate
112 inner plate
113 insulating plate
12 second clamping plate
121 mounting groove
122 pressure relief hole
123 limiting groove
13 side plate
14 first fixing member
15 second fixing member
151 fixing plate
152 positioning protrusion
153 limiting protrusion
2 battery cell
3 spacer
4 aerogel pad
5 adhesive layer
6 thermal conductive layer
7 insulating protection box
71 accommodation cavity
8 terminal assembly
81 connecting piece
82 bus terminal
821 main connector
822 branch connector
9 insulating sleeve
91 plug-in slot;
100 battery module
200 fixed structural member
300 pressure relief channel.

### DETAILED DESCRIPTION

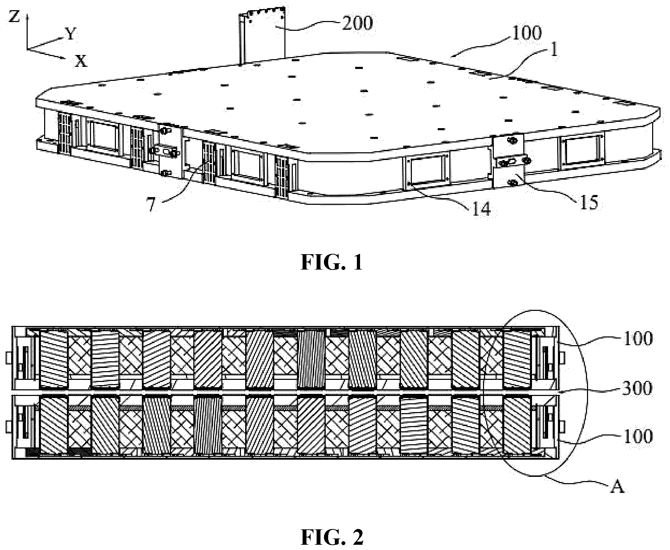

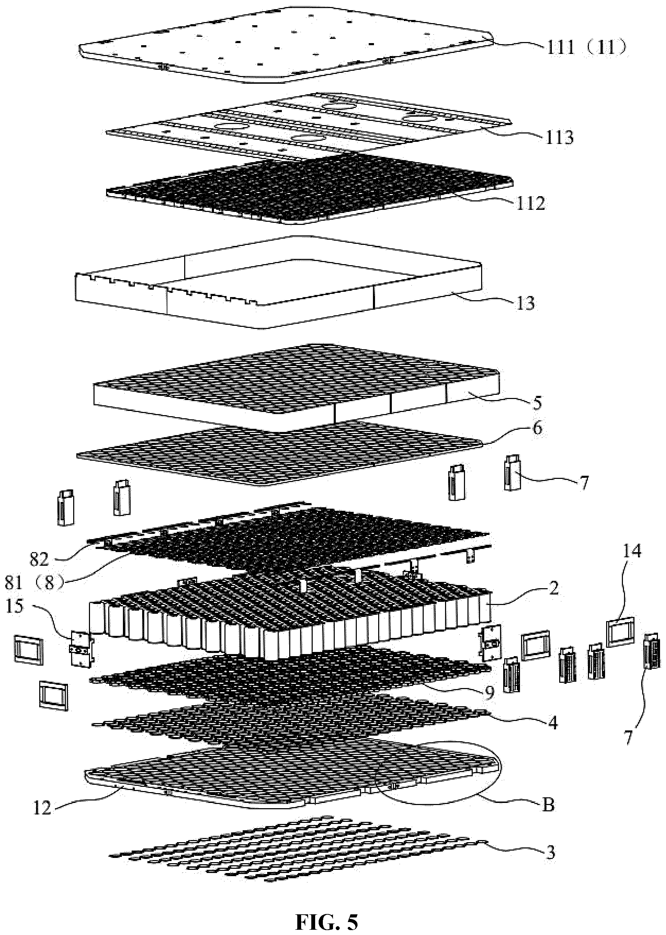

As shown in FIGS. 1 to 5, a battery pack provided by the present application includes a battery module 100 and a fixed structural member 200. At least two battery modules 100 are provided. All battery modules 100 are arranged in sequence in the height direction (Z direction shown in the figure) of the battery pack. An even number of battery modules 100 are provided so that two adjacent battery modules 100 are grouped to form a module assembly. That is, the number of battery modules 100 contained in the battery pack may be two, four, six, eight, and so on. By arranging multiple battery modules 100 in the battery pack, it is beneficial to increase the energy storage capacity of the battery pack in the limited space where the battery pack is installed, thereby increasing the energy density of the battery pack. In this embodiment, two battery modules 100 are provided, and the two battery modules 100 are parallel and spaced apart in the height direction of the battery pack. In the same module assembly, a pressure relief channel 300 is formed between the two battery modules 100. When a battery module 100 has thermal runaway, the two battery modules 100 share a pressure relief channel 300 for pressure relief protection.

The battery module 100 includes a housing 1, a battery cell 2, a spacer 3, an aerogel pad 4, an insulating sleeve 9, an adhesive layer 5, a thermal conductive layer 6, and a terminal assembly 8. The housing 1 plays an overall supporting and protective role. The housing 1 has a rectangular parallelepiped structure, and the thickness direction of the housing 1 is parallel to the height direction of the battery pack. In the same module assembly, the large surfaces of the two housings 1 face each other, and a pressure relief channel 300 is formed between the two housings 1. The housing 1 has an accommodation cavity for accommodating the battery cell. Multiple battery cells 2 are provided and distributed in the accommodation cavity. The battery cell 2 is a cylindrical battery cell, and the length of the battery cell 2 extends in the thickness direction of the housing 1. One end of the battery cell 2 has an explosion-proof hole. When the battery cell 2 has thermal runaway, pressure relief protection can be performed through the explosion-proof hole. The end of the battery cell 2 away from the explosion-proof hole has a positive electrode and a negative electrode. The terminal assembly 8 functions as a bus and is electrically connected to the positive and negative electrodes of the battery cell 2. Multiple pressure relief holes 122 are disposed on one side surface of the housing 1 facing the pressure relief channel 300, and the number and positions of the pressure relief holes 122 are in a one-to-one correspondence with the multiple battery cells 2. The explosion-proof hole of the battery cell 2 communicates with the corresponding pressure relief hole 122. All the pressure relief holes 122 on the two housings 1 are facing the pressure relief channel 300. That is, an end of the pressure relief hole 122 communicates with the explosion-proof hole, and the other end communicates with the pressure relief channel 300. When the battery cell 2 has thermal runaway, the explosion-proof hole is opened, and the electrolyte and high-temperature gas inside the battery cell 2 are discharged into the pressure relief channel 300 sequentially through the explosion-proof hole and the pressure relief hole 122. The spacer 3 and the aerogel pad 4 both play a role in heat insulation, and the two are arranged to block the pressure relief hole 122. When the battery cell 2 has thermal runaway, the high-temperature gas impacts and thus causes the spacer 3 and the aerogel pad 4 to detach from the housing 1, and the spacer 3 and the aerogel pad 4 move into the pressure relief channel 300 with the high-temperature gas. For the battery cell 2 that has not experienced thermal runaway, the spacer 3 and the aerogel pad 4 play an isolation role, preventing the high-temperature gas in the pressure relief channel 300 from moving towards the inside of the housing 1 through the pressure relief hole 122, thereby preventing the high-temperature gas in the pressure relief channel 300 from causing thermal impact on the battery cell 2 in the surrounding area that has not experienced thermal runaway. The insulating sleeve 9 plays an insulating isolation role, and the insulating sleeve 9 is sleeved on the end of the battery cell 2 to prevent the battery cell 2 from contacting the surrounding metal parts.

Exemplarily, the housing 1 includes a first clamping plate 11, a second clamping plate 12, and a side plate 13. In the thickness direction of the housing 1 (Z direction in the figure), the first clamping plate 11 and the second clamping plate 12 are parallel and spaced apart. The side plate 13 has a square cylindrical structure. The side plate 13 is arranged around the periphery of the first clamping plate 11 and the periphery of the second clamping plate 12, and the two ends of the side plate 13 are connected to the first clamping plate 11 and the second clamping plate 12 respectively. This structure forms an accommodation cavity among the first clamping plate 11, the second clamping plate 12, and the side plate 13. The pressure relief hole 122 is disposed on the second clamping plate 12. The ends of all the battery cells 2 with explosion-proof holes in the accommodation cavity are facing the second clamping plate 12, and the ends of the battery cells 2 with positive and negative electrodes are facing the first clamping plate 11. Since the second clamping plate 12 serves as the side wall of the pressure relief channel 300, the second clamping plate 12 is a metal plate to improve the heat conduction efficiency of the second clamping plate 12, and the material of the second clamping plate 12 may be aluminum alloy 7075-T6. The second clamping plate 12 is a metal plate, which is conducive to improving the mechanical strength and thermal conductivity of the second clamping plate 12, providing good support for the battery cell 2, and conducting the heat generated by the battery cell 2 to the outside through the second clamping plate 12. In this case, the pressure relief channel 300 may also be used as a heat dissipation channel to facilitate the outward diffusion of heat from inside the entire battery module 100.

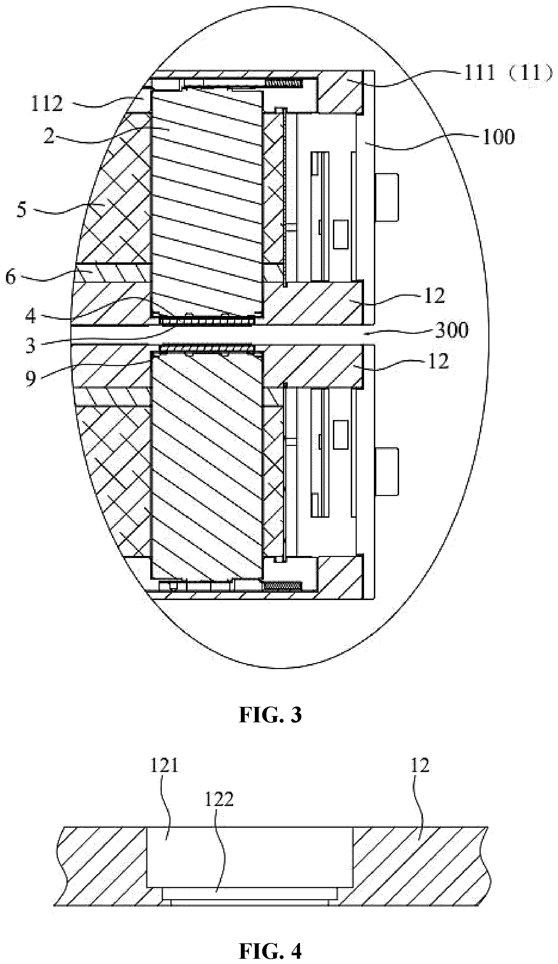

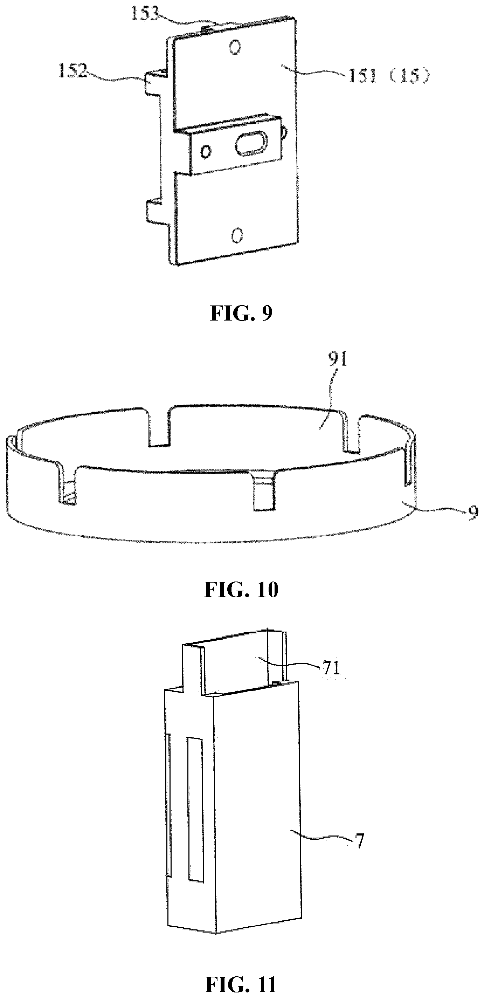

With reference to FIGS. 3, 4, and 10, multiple mounting grooves 121 are disposed on one side surface of the second clamping plate 12 facing the battery cell 2, and the multiple mounting grooves 121 are in a one-to-one correspondence with the multiple battery cells 2. The mounting groove 121 is provided for installing the battery cell 2, that is, one end of the battery cell 2 having the explosion-proof hole is inserted into the corresponding mounting groove 121 to fix the battery cell 2. The pressure relief hole 122 is disposed at the bottom of the mounting groove 121 so that the mounting groove 121 communicates with the pressure relief channel 300 through the pressure relief hole 122. The pressure relief hole 122 is a stepped hole. The stepped hole includes a large hole and a small hole that are interconnected. The diameter of the large hole is greater than the diameter of the small hole. The large hole is disposed on a side close to the battery cell 2. The small hole is disposed on a side close to the pressure relief channel 300. To prevent the battery cell 2 from directly contacting the second clamping plate 12 and causing a short circuit accident, an insulating sleeve 9 is disposed on one end of the battery cell 2 that has the explosion-proof hole. The material of the insulating sleeve 9 is selected from the flame-retardant AB S + PC material in the related art. A plug-in slot 91 matching the battery cell 2 is disposed on one end of the insulating sleeve 9, and the wall thickness of the plug-in slot 91 is 0.5 mm to 1 mm. For example, the wall thickness of the plug-in slot 91 includes but is not limited to 0.5 mm, 0.6 mm, 0.7 mm, 0.8 mm, 0.9 mm, and 1mm. A through hole is disposed through the bottom of the plug-in slot 91. During installation, the end of the battery cell 2 with the explosion-proof hole is plugged into the plug-in slot 91, and the end of the battery cell 2 with the explosion-proof hole is inserted into the mounting groove 121 of the second clamping plate 12 together with the insulating sleeve 9. In this case, the two ends of the through hole communicate with the explosion-proof hole and the pressure relief hole 122 respectively. When the battery cell 2 has thermal runaway, the electrolyte and high-temperature gas inside the battery cell 2 are discharged into the pressure relief channel 300 sequentially through the explosion-proof hole, the through hole, and the pressure relief hole 122. It should be noted that the mounting forms between the insulating sleeve 9 and the battery cell 2 include the following three types: The first type is that the insulating sleeve 9 is sleeved on the side wall of the battery cell 2, and the insulating sleeve 9 is close to the end of the battery cell 2. The second type is that the insulating sleeve 9 is sleeved on the end face of the battery cell 2. The third type is that the insulating sleeve 9 is sleeved on the side wall and end face of the battery cell 2.

Exemplarily, with reference to FIG. 3, the adhesive layer 5 and the thermal conductive layer 6 are filled in the accommodation cavity of the housing 1. The adhesive layer 5 is a filler such as polyurethane, epoxy resin, and silicone. The function is to fill the gap between adjacent battery cells 2 to protect and fix the battery cells 2. The thermal conductive layer 6 is a two-component polyurethane thermal conductive adhesive that has a thermal conductive effect so that the heat generated by the battery cell 2 can be conducted to the housing 1 through the thermal conductive layer 6. Thus, the larger surface of the housing 1 is utilized for heat dissipation. In this embodiment, the accommodation cavity is filled with a thermal conductive layer 6 and an adhesive layer 5, the adhesive layer 5 is disposed on the side of the accommodation cavity close to the first clamping plate 11, and the thermal conductive layer 6 is disposed on the side of the accommodation cavity close to the second clamping plate 12. The battery cell 2 is embedded in the thermal conductive layer 6 and the adhesive layer 5. By filling the adhesive layer 5 and the thermal conductive layer 6 in the accommodation cavity, the gap between the battery cell 2 and the housing 1 is eliminated so that the mounting of the battery cell 2 is more stable, and the performance of the battery pack is improved in a vibration environment. Moreover, a thermally conductive adhesive layer 6 is disposed on the side of the accommodation cavity close to the second clamping plate 12, which is conducive to the heat generated by the battery cell 2 being transferred to the second clamping plate 12 through the thermally conductive adhesive layer 6, thereby improving the heat dissipation performance of the entire battery module 100. Of course, in some embodiments, under the condition of satisfying the heat dissipation performance of the battery module 100, the thermally conductive adhesive layer 6 may be eliminated, the adhesive layer 5 is filled in the accommodation cavity, and the battery cell 2 is embedded in the adhesive layer 5.

Exemplarily, with reference to FIGS. 3, 5, and 7, the first clamping plate 11 includes an outer plate 111, an inner plate 112, and an insulating plate 113. The outer plate 111, the insulating plate 113, and the inner plate 112 are stacked in the thickness direction of the housing 1. The outer plate 111 is disposed on the side away from the accommodation cavity, the inner plate 112 is disposed on the side close to the accommodation cavity, and the insulating plate 113 is sandwiched between the inner plate 112 and the outer plate 111. The material of the inner plate 112 is selected from the flame-retardant ABS + PC material in the related art. Multiple grooves are disposed on the inner plate 112, the multiple grooves are arranged in a one-to-one correspondence with the multiple battery cells 2, and the end of the battery cell 2 away from the explosion-proof hole is plugged into the groove on the inner plate 112 to fix the battery cell 2. It can be seen that the two ends of the battery cell 2 are plugged and fixed with the inner plate 112 and the second clamping plate 12 respectively so that the inner plate 112 and the second clamping plate 12 can clamp the battery cell 2. The outer plate 111 is a metal plate, and the material of the outer plate 111 may be aluminum alloy 7075-T6. The thickness of the outer plate 111 is 2 mm to 4 mm. For example, the thickness of the outer plate 111 includes but is not limited to 2 mm, 2.5 mm, 3 mm, 3.5 mm, and 4 mm. Setting the outer plate 111 as a metal plate is conducive to improving the overall strength of the first clamping plate 11 and protecting the circuit connection inside the housing 1. The insulating plate 113 is made of an insulating material in the related art. The function of the insulating plate 113 is to isolate the outer plate 111 to prevent the metal outer plate 111 from contacting the internal electrical components (such as the terminal assembly 8). In an embodiment, the insulating plate 113 is made of glass fiber material, and the thickness of the insulating plate 113 is 0.5-0.7 mm. For example, the thickness of the insulating plate 113 includes but is not limited to 0.5 mm, 0.6 mm, and 0.7 mm. Of course, in other embodiments, when the outer plate 111 is an insulating material, the insulating plate 113 may be eliminated.

The terminal assembly 8 includes a connecting piece 81 and a bus terminal 82. Both the connecting piece 81 and the bus terminal 82 are conductors and are configured to conduct the circuit. Multiple connecting pieces 81 are provided, and the number of connecting pieces 81 is designed in coordination with the number of battery cells 2. The connecting piece 81 is mounted on the inner plate 112, and two adjacent battery cells 2 are electrically connected through connecting pieces 81. In practical applications, the connection form of the connecting piece 81 is arranged based on the design indicators of the battery module 100 so that all battery cells 2 are connected in series or in parallel. Multiple bus terminals 82 are provided and mounted on the inner plate 112. The bus terminal 82 penetrates through the housing 1, that is, one end of the bus terminal 82 extends into the accommodation cavity of the housing 1, and the other end extends to the outside of the housing 1. The end of the bus terminal 82 disposed outside has a main connector 821, and the main connector 821 is configured to be electrically connected to an external electrical device. The bus terminal 82 has multiple branch connectors 822 at one end disposed inside, and the branch connectors 822 are configured to be electrically connected to the connecting pieces 81. The bus terminal 82 and the connecting piece 81 are used to collect the current of all the battery cells 2 to the main connector 821 located outside the housing 1 to facilitate connection with an external electrical device.

Exemplarily, with reference to FIGS. 1, 5, and 11, the battery module 100 also includes an insulating protection box 7. The insulating protection box 7 is made of an insulating material, such as a flame-retardant ABS + PC material in the related art. The insulating protection box 7 is sleeved on the main connector 821 of the bus terminal 82 so that the insulating protection box 7 insulates and protects the bus terminal 82 located outside the housing 1. The shape of the insulating protection box 7 matches the main connector 821 so that the insulating protection box 7 can be wrapped around the outside of the main connector 821. A accommodation cavity 71 is disposed on the insulating protection box 7, and the main connector 821 is inserted into the accommodation cavity 71.

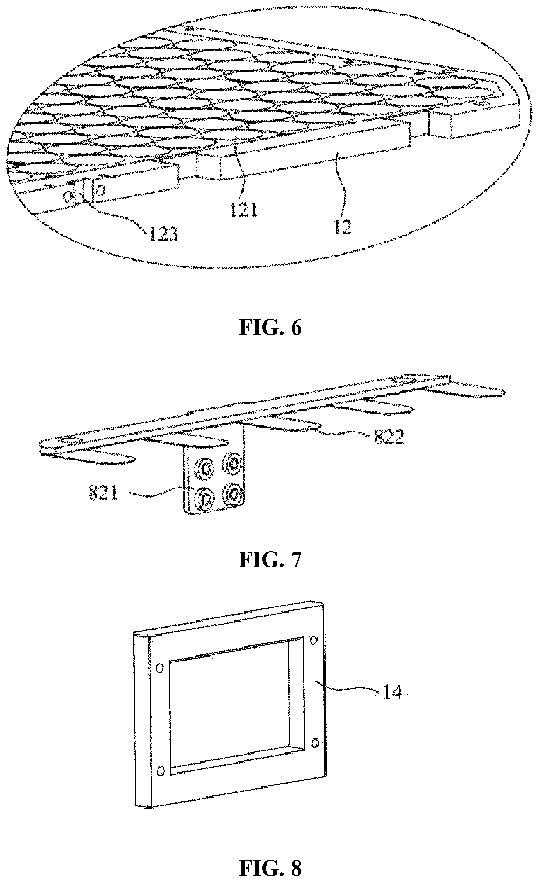

Exemplarily, with reference to FIGS. 1, 8, and 9, the housing 1 also includes a first fixing member 14 and a second fixing member 15. The first clamping plate 11 and the second clamping plate 12 are connected and fixed by the first fixing member 14 and the second fixing member 15. Multiple first fixing members 14 are provided and spaced apart around the circumference of the housing 1. The first fixing member 14 is a square frame structure, and the first fixing member 14 is set as a hollow structure to meet the lightweight design. The two ends of the first fixing member 14 are plugged with the first clamping plate 11 and the second clamping plate 12 respectively to play the role of positioning the first clamping plate 11 and the second clamping plate 12. Multiple second fixing members 15 are provided and spaced apart around the circumference of the housing 1. The second fixing member 15 includes a fixing plate 151, a positioning protrusion 152, and a limiting protrusion 153. Two positioning protrusions 152 are provided and arranged in parallel and spaced apart on one side surface of the fixing plate 151, and the spacing between the two positioning protrusions 152 matches the spacing between the first clamping plate 11 and the second clamping plate 12. The length direction of the fixing plate 151 is parallel to the thickness direction of the housing 1. The two positioning protrusions 152 are spaced apart in the length direction of the fixing plate 151. Two limiting protrusions are provided and disposed on the same side surface as the two positioning protrusions 152, and the two limiting protrusions 153 are disposed at two ends of the fixing plate 151 in the length direction. Correspondingly, with reference to FIGS. 1 and 6, the periphery of the second clamping plate 12 is provided with a limiting groove 123 that cooperates with a limiting protrusion 153. The outer plate 111 of the first clamping plate 11 is also provided with a limiting groove 123 that cooperates with the limiting protrusion 153. When the housing 1 is mounted, the two ends of the first fixing member 14 are plugged into the first clamping plate 11 and the second clamping plate 12 respectively to play a positioning role so that the first clamping plate 11 and the second clamping plate 12 maintain a suitable distance between themselves. Moreover, the two ends of the fixing plate 151 of the second fixing member 15 in the length direction abut against the periphery of the first clamping plate 11 and the periphery of the second clamping plate 12, and the two ends of the fixing plate 151 in the length direction are connected to the first clamping plate 11 and the second clamping plate 12 by fasteners respectively. The fastener is a screw. The two positioning protrusions 152 are inserted into the gap between the first clamping plate 11 and the second clamping plate 12, and the two positioning protrusions 152 abut against the opposite sides of the first clamping plate 11 and the second clamping plate 12 respectively. This structure enables the positioning protrusion 152 to play a positioning role for the first clamping plate 11 and the second clamping plate 12 so that the first clamping plate 11 and the second clamping plate 12 maintain a suitable distance between themselves. Moreover, the two limiting protrusions 153 are plugged into the limiting grooves 123 on the first clamping plate 11 and the second clamping plate 12 to limit the entire second fixing member 15 from sliding in the length direction (X direction in the figure) or the width direction (Y direction in the figure) of the housing 1, thereby playing a limiting role. Of course, in some embodiments, the first fixing member 14 or the second fixing member 15 may also be separately disposed between the first clamping plate 11 and the second clamping plate 12.

The first fixing member 14 is a metal plate, the material of which is stainless steel SUS304, and the thickness of the metal plate is 8 mm to 12 mm. The second fixing member 15 is a metal plate, the material of which is stainless steel SUS304, and the thickness of the metal plate is 25 mm to 35 mm.

Exemplarily, to improve the overall structural strength of the battery module 100, the housing 1 also includes multiple connecting posts. Multiple connecting posts are mounted in the accommodation cavity of the housing 1, and the connecting posts are arranged in the gaps between adjacent battery cells 2. The two ends of the connecting post are connected and fixed to the first clamping plate 11 and the second clamping plate 12 by fasteners respectively.

Exemplarily, as shown in FIG. 1, the fixed structural member 200 is configured to mount the battery module 100, and the battery module 100 and the fixed structural member 200 are connected and fixed by fasteners. The number and positions of the fixed structural members 200 are set in a one-to-one correspondence with the number and positions of the second fixing members 15, and the second fixing member 15 is connected and fixed to the fixed structural member 200 by a fastener. It can also be understood that two or more battery modules 100 are connected together by the fixed structural members 200 to form a battery pack.

Exemplarily, with reference to FIG. 3 and FIG. 4, the spacer 3 is a circular thin plate structure, the material of the spacer 3 is phlogopite, and the thickness of the spacer 3 is 0.4 mm to 0.6 mm. For example, the thickness of the spacer 3 includes but is not limited to 0.4 mm, 0.45 mm, 0.5 mm, 0.55 mm, and 0.6 mm. The spacer 3 is mounted on the side surface of the second clamping plate 12 facing the pressure relief channel 300 such that the spacer 3 can selectively block the pressure relief hole 122. Optionally, the spacer 3 is bonded and fixed to the second clamping plate 12. When the battery cell 2 has thermal runaway, the spacer 3 falls off from the second clamping plate 12 under the action of high-pressure gas to connect the pressure relief hole 122 to the pressure relief channel 300. The aerogel pad 4 has a circular thin plate structure and plays a role of heat insulation. The aerogel pad 4 is mounted in the large hole of the pressure relief hole 122. The aerogel pad 4 is elastic. When the battery cell 2 experiences thermal runaway, under the action of high-pressure gas, the aerogel pad 4 is deformed and moves through the small hole of the pressure relief hole 122 to the pressure relief channel 300 to connect the pressure relief hole 122 to the pressure relief channel 300. In this embodiment, by setting the aerogel pad 4 in the pressure relief hole 122 and covering the end of the pressure relief hole 122 with a spacer 3, the high-temperature and high-pressure gas in the pressure relief channel 300 is prevented from entering nearby pressure relief holes 122, thereby preventing the nearby battery cell 2 that has not experienced thermal runaway from being affected by heat. Additionally, due to the provision of the spacer 3 and the aerogel pad 4, the superposition of the insulation effect of the two is conducive to improving the insulation effect between the battery cell 2 and the pressure relief channel 300. The aerogel pad 4 is mounted inside the pressure relief hole 122, that is, the spacer 3 is disposed in the pressure relief channel 300. This structure can reduce the space occupied by the heat insulation parts to the pressure relief channel 300, while meeting the requirements of improving the circulation efficiency of the gas in the pressure relief channel 300 and preventing the nearby battery cells 2 from being thermally affected during thermal runaway.

This embodiment, by arranging multiple battery modules 100 in a battery pack, facilitates the placement of more battery cells 2 within the limited space for installing the battery pack, thereby improving the overall energy density of the battery pack. Additionally, two adjacent battery modules 100 are spaced apart to form a pressure relief channel 300 so that the two adjacent battery modules 100 share the same pressure relief channel 300, which helps improve the space utilization of the battery pack. The two battery modules 100 share a pressure relief channel 300 so that when battery cells 2 in the two adjacent battery modules 100 have thermal runaway, high-temperature gases are discharged into the same pressure relief channel 300, that is, the high-temperature area is also concentrated in the pressure relief channel 300 during pressure relief. This structure makes it easier to implement corresponding thermal insulation designs in the area of the pressure relief channel 300, providing thermal protection for the battery cells 2 inside the battery modules 100, which helps simplify the overall structure of the battery pack. Since the pressure relief holes 122 on the two battery modules 100 are facing the pressure relief channel 300, the high-temperature gases discharged during pressure relief enter the pressure relief channel 300, with the thermal effect on a battery cell 2 mainly concentrated at the end of the battery cell 2 that has the explosion-proof hole, thereby preventing high-temperature gases from affecting the end of the battery cell 2 that has the positive and negative electrodes. As a result, the entire battery pack has good safety performance.

## Claims

1. A battery pack, comprising at least two battery modules (100), wherein each battery module (100) of the at least two battery modules (100) comprises a housing (1) and a plurality of battery cells (2) disposed in the housing (1), a plurality of pressure relief holes (122) are disposed on a side surface of the housing (1), the plurality of pressure relief holes (122) are in a one-to-one correspondence with the plurality of battery cells (2), one end of each battery cell (2) of the plurality of battery cells (2) has an explosion-proof hole, and the explosion-proof hole communicates with a corresponding pressure relief hole (122) of the plurality of pressure relief holes (122), wherein two adjacent battery modules (100) of the at least two battery modules (100) form a module assembly, and in a same module assembly, two housings (1) are spaced apart to form a pressure relief channel (300), and pressure relief holes (122) on the two housings (1) are facing the pressure relief channel (300).

2. The battery pack according to claim 1, wherein the each battery module (100) further comprises a spacer (3), each pressure relief hole (122) of the plurality of pressure relief holes (122) is correspondingly provided with spacer (3), the spacer (3) is mounted on a side surface of the housing (1) facing the pressure relief channel (300) so that the spacer (3) selectively seals the each pressure relief hole (122).

3. The battery pack according to claim 1, wherein the each battery module (100) further comprises an aerogel pad (4) disposed in the pressure relief hole (122), and in a case where a battery cell (2) of the plurality of battery cells (2) is under pressure relief, pressure relief airflow drives the aerogel pad (4) to move towards the pressure relief channel (300).

4. The battery pack according to claim 3, wherein the pressure relief hole (122) is a stepped hole, the stepped hole comprises a large hole and a small hole which are interconnected, the large hole is disposed on a side close to the battery cell (2), the small hole is disposed on a side close to the pressure relief channel (300), and the aerogel pad (4) is disposed in the large hole.

5. The battery pack according to claim 1, wherein the each battery module (100) further comprises an insulating sleeve (9), the each battery cell (2) is correspondingly provided with an insulating sleeve (9), the insulating sleeve (9) is sleeved on an end of the each battery cell (2) having the explosion-proof hole, a mounting groove (121) for mounting the each battery cell (2) is disposed on an inner wall of the housing (1), the pressure relief hole (122) is disposed at a bottom of the mounting groove (9), a through hole is disposed on the insulating sleeve (9), and the insulating sleeve (9) is inserted into the mounting groove (9) so that two ends of the through hole communicate with the explosion-proof hole and the pressure relief hole (122) respectively.

6. The battery pack according to any one of claims 1 to 5, wherein the housing (1) comprises a first clamping plate (11), a second clamping plate (12), and a side plate (13), the first clamping plate (11) and the second clamping plate (12) are arranged in parallel and spaced apart, the side plate (13) surrounds a periphery of the first clamping plate (11) and a periphery of the second clamping plate (12), two ends of the side plate (13) are connected to the first clamping plate (11) and the second clamping plate (12) respectively so that the first clamping plate (11), the second clamping plate (12), and the side plate (13) form an accommodation cavity (71) for accommodating the plurality of battery cells (2), and the pressure relief hole (122) is disposed on the second clamping plate (12).

7. The battery pack according to claim 6, wherein the second clamping plate (12) is a metal plate.

8. The battery pack according to claim 6, wherein the accommodation cavity (71) is filled with an adhesive layer (5), and the plurality of battery cells (2) are embedded in the adhesive layer (5).

9. The battery pack according to claim 8, wherein the accommodation cavity (71) is further filled with a thermal conductive layer (6) disposed on a side of the accommodation cavity (71) close to the second clamping plate (12), the adhesive layer (5) is disposed on a side of the accommodation cavity (71) close to the first clamping plate (11), and the plurality of battery cells (2) are embedded in the thermal conductive layer (6) and the adhesive layer (5).

10. The battery pack according to claim 6, wherein the housing (1) further comprises at least one of a first fixing member (14) and a second fixing member (15), two opposite ends of the first fixing member (14) are plugged into the first clamping plate (11) and the second clamping plate (12) respectively, the second fixing member (15) comprises a fixing plate (151) and two positioning protrusions (152) spaced apart on the fixing plate (151), the two positioning protrusions (152) abut against opposite sides of the first clamping plate (11) and the second clamping plate (12) respectively, and two ends of the fixing plate (151) are connected to the first clamping plate (11) and the second clamping plate (12) by fasteners respectively.

11. The battery pack according to claim 6, wherein the first clamping plate (11) comprises an outer plate (111) and an inner plate (112) which are stacked, an end of the each battery cell (2) away from the explosion-proof hole is plugged into the inner plate (112), and the outer plate (111) is disposed on a side of the inner plate (112) away from the each battery cell (2).
